# FASCICULE DE BREVET EUROPEEN

(11) **EP 2 643 400 B1**
(45) Date de publication et mention de la délivrance du brevet: **06.05.2020**
(21) Numéro de dépôt: 11790932.5
(22) Date de dépôt: 24.11.2011
(51) Int. Cl.: C08K 5/00, C08L 19/00, B60C 1/00

(54) **BANDE DE ROULEMENT DE PNEUMATIQUE NEIGE**
REIFENLAUFFLÄCHE FUR WINTERREIFEN
TREAD FOR WINTER TYRE

(30) Priorité: 26.11.2010 FR 1059805
(43) Date de publication de la demande: 02.10.2013
(73) Titulaire: Compagnie Générale des Etablissements Michelin, 63000 Clermont-Ferrand (FR)
(72) Inventeur: LOPEZ, Béatrice, F-63040 Clermont-Ferrand Cedex 9 (FR); LABRUNIE, Philippe, F-63040 Clermont-Ferrand Cedex 9 (FR); VASSEUR, Didier, F-63040 Clermont-Ferrand Cedex 9 (FR); SAINTIGNY, Xavier, 63040 Clermont-Ferrand Cedex 9 (FR)
(74) Mandataire: Desbordes, Guillaume
(86) Numéro de dépôt international: PCT/EP2011/070892
(87) Numéro de publication internationale: WO 2012/069565

(56) Documents cités:
- EP-A1- 1 911 797
- EP-A1- 2 070 952
- WO-A1-2009/125747

## Description

Le domaine de l'invention est celui des compositions de caoutchouc pour bande de roulement des pneumatiques, plus précisément des compositions de caoutchouc pour bande de roulement de pneumatiques neige ou hiver aptes à rouler sur des sols recouverts de neige (en anglais appelés « snow tyres » ou « winter tyres »). De manière connue, ces pneumatiques neige repérés par une inscription M+S ou M.S. ou encore M&S, marquée sur leurs flancs, se caractérisent par un dessin de la bande de roulement et une structure destinés avant tout à assurer dans la boue et la neige fraîche ou fondante un comportement meilleur que celui des pneumatiques du type routier (en anglais appelés « road type tyre ») conçus pour rouler sur des sols non enneigés.

Les sols enneigés, dits sols blancs, ont pour caractéristique de présenter un faible coefficient de frottement, ce qui a conduit au développement de pneumatiques neige comportant des bandes de roulement à base de compositions de caoutchouc diénique présentant une faible température de transition vitreuse, Tg. Toutefois la performance d'adhérence sur sol mouillé de ces pneumatiques comportant de telles bandes de roulement est généralement inférieure à celle des pneumatiques routiers dont les bandes de roulement sont généralement à base de compositions de caoutchouc de formulations différentes, notamment à plus haute Tg.

De ce qui précède, il est un objectif constant des manufacturiers de pneumatiques d'améliorer davantage les performances d'adhérence sur sol mouillé des pneumatiques hiver sans détériorer toutefois la performance d'adhérence sur la neige.

Poursuivant leurs recherches, les Demanderesses ont découvert de façon inattendue que l'utilisation combinée de certains élastomères diéniques fonctionnels, d'une charge inorganique renforçante et d'un système plastifiant spécifique, permettait d'améliorer davantage la performance d'adhérence sur sol mouillé des pneumatiques neige sans dégrader l'adhérence sur la neige.

Ainsi l'invention a pour objet un pneumatique neige dont la bande de roulement comporte une composition de caoutchouc, ladite composition de caoutchouc comprenant au moins :
- 20 à 100 pce d'un premier élastomère diénique portant au moins une fonction SiOR, R étant un hydrogène ou un radical hydrocarboné ;
- optionnellement 0 à 80 pce d'un deuxième élastomère diénique ;
- 100 à 160 pce d'une charge inorganique renforçante ;
- un système plastifiant comprenant :
   - selon un taux A compris entre 10 et 60 pce une résine hydrocarbonée présentant une Tg supérieure à 20°C ;
   - selon un taux B compris entre 10 et 60 pce un agent plastifiant liquide ;
   - étant entendu que le taux total A+B est supérieur à 50 pce.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*), comme des véhicules industriels choisis en particulier parmi camionnettes et poids-lourd (i.e. bus, engins de transport routier tels que camions).

L'invention ainsi que ses avantages seront aisément compris à la lumière de la description et des exemples de réalisation qui suivent.

### I- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents). Toutes les valeurs de température de transition vitreuse « Tg » sont mesurées de manière connue par DSC (Differential Scanning Calorimetry) selon la norme ASTM D3418 (1999).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Elastomère diénique

Par élastomère (ou indistinctement "caoutchouc", les deux termes étant considérés comme synonymes) du type "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle s'applique à tout type d'élastomère diénique, l'homme du métier du pneumatique comprendra que l'invention est de préférence mise en œuvre avec des élastomères diéniques essentiellement insaturés.

Ces définitions étant données, on entend notamment par élastomère diénique susceptible d'être mis en œuvre dans les compositions conformes à l'invention :
(a)- tout homopolymère obtenu par polymérisation d'un monomère diène conjugué, ayant de préférence de 4 à 12 atomes de carbone ;
(b)- tout copolymère obtenu par copolymérisation d'un ou plusieurs diènes conjugués entre eux ou avec un ou plusieurs composés vinyle aromatique ayant de préférence de 8 à 20 atomes de carbone.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique.

Plus préférentiellement, on utilise un premier élastomère diénique choisi dans le groupe constitué par les polybutadiènes (BR) (notamment ceux ayant un taux de liaisons cis-1,4 supérieur à 90%), les polyisoprènes de synthèse (IR), le caoutchouc naturel (NR), les copolymères de butadiène et les mélanges de ces élastomères ; de tels copolymères sont choisis plus préférentiellement dans le groupe constitué par les copolymères de butadiène-styrène (SBR) et les mélanges de tels copolymères.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et - 80°C, une teneur en styrène comprise entre 5% et 60% en poids et plus particulièrement entre 10% et 50%, une teneur (% molaire) en liaisons -1,2 de la partie butadiénique comprise entre 4% et 75%, une teneur (% molaire) en liaisons trans-1,4 comprise entre 10% et 80%.

Selon un mode de réalisation particulier de l'invention, le premier élastomère diénique a une température de transition vitreuse comprise dans un domaine allant de -80°C à -35°C, préférentiellement allant de -70°C à -40°C.

Le premier élastomère diénique peut avoir toute microstructure qui est fonction des conditions de polymérisation utilisées, notamment de la présence ou non d'un agent modifiant et/ou randomisant et des quantités d'agent modifiant et/ou randomisant employées. Cet élastomère peut être par exemple à blocs, statistique, séquencé, microséquencé, et être préparé en dispersion ou en solution.

Une caractéristique essentielle de la composition de caoutchouc de la bande de roulement du pneumatique neige conforme à l'invention est de comporter un premier élastomère diénique portant au moins une (c'est-à-dire une ou plusieurs) fonction SiOR, R étant l'hydrogène ou un radical hydrocarboné, notamment un alkyle, ayant préférentiellement 1 à 12 atomes de carbone, en particulier méthyle ou éthyle.

On entend par radical hydrocarboné, un groupement monovalent essentiellement constitué d'atomes de carbone et d'hydrogène, un tel groupement pouvant comporter au moins un hétéroatome, sachant que l'ensemble constitué par les atomes de carbone et d'hydrogène représente la fraction numérique majoritaire dans le radical hydrocarboné.

Selon un mode particulier de réalisation de l'invention, le radical hydrocarboné est un alkyle, ramifié ou linéaire ou encore cyclique, ayant 1 à 12 atomes de carbone, plus préférentiellement de 1 à 6 atomes de carbone, encore plus préférentiellement de 1 à 4 atomes de carbone, en particulier un méthyle ou un éthyle.

Selon un autre mode de réalisation particulier de l'invention, le radical R est un alkoxyalkyle, plus particulièrement ayant 2 à 8 atomes de carbone.

Dans la présente demande, on utilise le terme « la fonction SiOR » pour désigner au moins une fonction SiOR, c'est-à-dire une ou plusieurs fonctions SiOR.

De façon générale, une fonction portée par un élastomère peut être située sur la chaîne élastomère selon l'une des trois configurations possibles : le long de la chaîne élastomère comme groupe pendant, à une extrémité de la chaîne élastomère ou bien à l'intérieur même (c'est-à-dire en dehors des extrémités) de la chaîne élastomère. Ce dernier cas se présente notamment dans le cas où l'élastomère est fonctionnalisé par l'utilisation d'un agent de couplage ou d'étoilage qui apporte la fonction en question.

En particulier, la fonction SiOR portée par le premier élastomère diénique peut se situer le long de la chaîne élastomère comme groupe pendant, à une extrémité de la chaîne élastomère ou bien à l'intérieur même de la chaîne élastomère. Dans le cas où il y a plusieurs fonctions SiOR portées par l'élastomère, elles peuvent occuper l'une ou l'autre des configurations ci-dessus.

Le premier élastomère diénique peut être un polymère linéaire ou étoilé, voire branché. Si c'est un polymère linéaire, il peut être couplé ou non. Cet élastomère peut avoir une distribution moléculaire monomodale, bimodale ou polymodale.

Selon un autre mode de réalisation préférentiel de l'invention, le premier élastomère diénique est majoritairement sous une forme linéaire, c'est-à-dire que s'il comporte des chaînes étoilées ou branchées, celles-ci représentent une fraction pondérale minoritaire dans cet élastomère.

Selon un autre mode de réalisation particulier de l'invention, le premier élastomère diénique est préparé par polymérisation anionique.

Selon un mode de réalisation particulièrement préférentiel, le premier élastomère diénique est porteur d'au moins une (c'est-à-dire une ou plusieurs) fonction dite « silanol » de formule SiOH (R est l'hydrogène).

Des élastomères diéniques correspondant à une telle définition sont bien connus, ils ont par exemple été décrits dans les documents EP 0 778 311 B1, WO 2008/141702, WO 2006/050486, EP 0877 047 B1 ou EP 1 400 559 B1. La fonction silanol SiOH est préférentiellement située en extrémité de chaîne de l'élastomère diénique, en particulier sous la forme d'un groupement diméthylsilanol -SiMe₂SiOH.

Selon un mode de réalisation particulier de l'invention, la fonction silanol peut être liée à un polysiloxane qui constitue l'un des blocs d'un copolymère bloc comprenant aussi un bloc polydiène, comme par exemple décrit dans le brevet EP 0 778 311 B1.

Selon un autre mode de réalisation particulier de l'invention, la fonction silanol peut être liée à un polyéther constituant l'un des blocs d'un copolymère bloc comprenant aussi un bloc polydiène, comme décrit par exemple dans la demande WO 2009/000750.

Selon un autre mode de réalisation particulièrement préférentiel, le premier élastomère diénique est porteur d'au moins une (c'est-à-dire une ou plusieurs) fonction de formule SiOR dans laquelle R est un radical hydrocarboné.

Des élastomères diéniques correspondant à une telle définition sont également bien connus, ils ont par exemple été décrits dans les documents JP 63-215701, JP 62-227908, US 5 409 969 ou WO 2006/050486.

Selon un mode de réalisation particulier, la fonction SiOR (avec R radical hydrocarboné), notamment alcoxysilane, peut être liée à un polyéther qui constitue l'un des blocs d'un copolymère bloc comprenant aussi un bloc polydiène, comme décrit par exemple dans la demande WO 2009/000750.

Selon un autre mode de réalisation particulièrement préférentiel, le premier élastomère diénique, porteur d'au moins une (c'est-à-dire une ou plusieurs) fonction de formule SiOR dans laquelle R est l'hydrogène ou un radical hydrocarboné, est également porteur d'au moins une autre (c'est-à-dire une ou plusieurs) fonction qui est différente de la fonction SiOR. Cette autre fonction est choisie préférentiellement dans le groupe constitué par les fonctions époxy, étain ou amine, l'aminé pouvant être une amine primaire, secondaire ou tertiaire. Les fonctions amine sont particulièrement préférées.

Des élastomères portant à la fois une fonction SiOR et une fonction époxy ont par exemple été décrits dans les brevets EP 0 890 607 B1 et EP 0 692 492 B1. Des élastomères portant à la fois une fonction SiOR et une fonction étain ont par exemple été décrits dans le brevet EP 1 000 970 B1.

Selon un mode de réalisation plus préférentiel, cette autre fonction portée par le premier élastomère diénique est une fonction amine, plus préférentiellement une amine tertiaire.

La fonction amine peut se situer sur la même extrémité (ou les mêmes extrémités) de la chaîne élastomère que la fonction SiOR. Les élastomères ayant une fonction SiOR et une fonction amine sur la même extrémité de chaîne ont été décrits par exemple dans les brevets ou demandes de brevet EP 1 457 501 B1, WO 2006/076629, EP 0 341 496 B1 ou WO 2009/133068, ou encore dans WO 2004/111094.

A titre d'exemples peuvent être cités comme agent de fonctionnalisation donnant lieu à la synthèse d'un élastomère porteur d'une fonction alcoxysilane et d'une fonction amine, les N,N-dialkylaminopropyltrialcoxysilanes, les azadialcoxysilanes cycliques tels que les N-alkyl-aza-dialcoxysilacycloalcanes, les 2-pyridyléthyltrialcoxysilanes, les 3-carbazoléthyltrialcoxysilanes, les 3-alkylidèneaminopropyltrialcoxysilanes, les N-trialcoxysilylpropylmorpholines, notamment le 3-(N,N-diméthylaminopropyl)tri-méthoxy-silane, 3-(1,3-diméthylbutylidène)aminopropyltriéthoxysilane, N-n-butyl-aza-2,2-diméthoxysilacyclopentane, 2-(4-pyridyléthyl)triéthoxysilane, 2-(triméthoxysilyl)-pyridine.

Selon un autre mode de réalisation, la fonction amine peut être présente sur une extrémité de chaîne qui ne porte pas la fonction SiOR. Une telle configuration peut être réalisée par exemple par l'emploi d'un amorceur portant une fonction amine, en particulier par l'utilisation d'un amorceur qui est un amidure de lithium, tel que l'amidure de lithium de la pyrrolidine ou de l'hexaméthylèneimine, ou un organolithien portant une fonction amine tel que le diméthylaminopropyllithium et le 3-pyrrolidinopropyllithium. De tels amorceurs ont été décrits par exemple dans les brevets EP 0 590 490 B1 et EP 0 626 278 B1. De tels élastomères portant une fonction SiOR et une fonction amine à leurs extrémités de chaîne différentes ont par exemple été décrits dans les brevets EP 0 778 311 B1 et US 5 508 333.

Selon un autre mode de réalisation particulièrement préférentiel, applicable à chacun des modes de réalisation précédemment décrits, le premier élastomère diénique comprend, outre les unités diéniques, des unités vinylaromatiques, en particulier des unités styrène. Préférentiellement les unités diéniques sont des unités butadiène, préférentiellement associés à des unités styrène. Avantageusement il s'agit d'un copolymère de styrène et de butadiène, SBR, préférentiellement d'un SBR solution (SSBR).

Selon un mode de réalisation tout particulièrement préférentiel de l'invention, le SBR comme premier élastomère diénique, a une température de transition vitreuse comprise dans un domaine allant de -80°C à -35°C, de préférence de -70°C à -40°C.

Ainsi, selon un mode de réalisation avantageux de l'invention, le premier élastomère diénique est un SBR, de préférence un SSBR, portant au moins une fonction silanol, préférentiellement positionnée en extrémité de chaîne.

Selon un mode de réalisation encore plus préférentiel de l'invention, le premier élastomère diénique est un SBR, de préférence un SSBR, portant une seule fonction silanol, préférentiellement positionnée en extrémité de chaîne.

Selon un autre mode de réalisation avantageux de l'invention, le premier élastomère diénique est un SBR, de préférence un SSBR, portant au moins une fonction SiOR (avec R radical hydrocarboné), notamment alcoxysilane, et au moins une fonction amine, de préférence tertiaire, préférentiellement toutes deux positionnées dans la chaîne, et encore plus préférentiellement à l'intérieur de la chaîne élastomère.

Selon un mode de réalisation encore plus préférentiel de l'invention, le premier élastomère diénique est un SBR, de préférence un SSBR, portant une seule fonction alcoxysilane et une seule fonction amine, de préférence tertiaire, préférentiellement toutes deux positionnées dans la chaîne, et encore plus préférentiellement à l'intérieur de la chaîne élastomère.

Il est entendu que le premier élastomère diénique portant une fonction SiOR peut être constitué par un mélange d'élastomères qui se différencient des uns des autres par la nature chimique de la fonction SiOR, par sa position sur la chaîne élastomère, par la présence d'une fonction supplémentaire autre que SiOR, par leur microstructure ou encore par leur macrostructure.

Le taux du premier élastomère diénique est compris dans un domaine allant de 20 à 100 pce, préférentiellement de 40 à 100 pce, encore plus préférentiellement de 50 à 100 pce.

Lorsque la composition de la bande de roulement du pneumatique conforme à l'invention comporte un deuxième élastomère diénique, optionnel, cet élastomère est différent du premier élastomère diénique dans la mesure où il ne porte pas de fonction SiOR. Néanmoins ce deuxième élastomère diénique peut avoir une microstructure ou une macrostructure qui peuvent être identiques à ou différentes de celles du premier élastomère diénique. Il est utilisé dans une proportion allant de 0 à 80 pce, préférentiellement de 0 à 60 pce, encore plus préférentiellement de 0 à 50 pce.

Selon un mode de réalisation préférentiel de l'invention, ce deuxième élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

Selon un mode de réalisation particulier de l'invention, ce deuxième élastomère diénique est un polybutadiène. Le polybutadiène est préférentiellement un polybutadiène cis-1,4, c'est-à-dire un polybutadiène ayant un taux de liaisons cis-1,4 supérieur à 90% (% molaire), préférentiellement supérieur ou égal à 96% (% molaire).

Selon un autre mode de réalisation particulier de l'invention, ce deuxième élastomère diénique est un copolymère de butadiène, notamment un SBR, de préférence un SBR solution.

Selon un autre mode de réalisation particulier de l'invention, ce deuxième élastomère peut porter au moins une fonction (bien entendu autre qu'une fonction SiOR), en particulier une fonction étain. Ce deuxième élastomère est avantageusement un élastomère diénique couplé ou étoilé à l'étain.

Il est entendu que le deuxième élastomère diénique peut être constitué par un mélange d'élastomères qui se différencient des uns des autres par leur microstructure, par leur macrostructure ou par la présence d'une fonction, par la nature ou la position de cette dernière sur la chaîne élastomère.

A titre d'exemples on peut citer comme fonctions autres que l'étain déjà cité, des groupes fonctionnels aminés tels que benzophénone par exemple, des groupes carboxyliques (tels que décrits par exemple dans WO 01/92402 ou US 6 815 473, WO 2004/096865 ou US 2006/0089445), des groupes polyéthers (tels que décrits par exemple dans EP 1 127 909 ou US 6 503 973) ou des groupes époxy.

### 1-2. Charge renforçante

Comme autre caractéristique essentielle, la composition de caoutchouc de la bande de roulement du pneumatique neige conforme à l'invention comprend une charge inorganique renforçante en quantité spécifique, dans une proportion allant de 100 à 160 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Avantageusement le taux de charge inorganique renforçante est compris dans un domaine allant de 100 à 150 pce, plus avantageusement de 105 à 140 pce.

Selon un mode de réalisation préférentiel de l'invention, la charge inorganique renforçante comprend de 50 à 100% en masse de silice.

Selon un autre mode de réalisation avantageux, la composition de caoutchouc de la bande de roulement du pneumatique neige conforme à l'invention, peut comporter du noir de carbone. Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 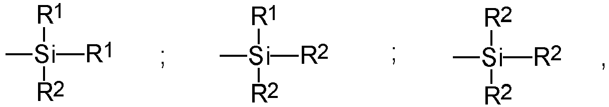
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemples d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### I-3. Système plastifiant :

Une autre caractéristique essentielle de la composition de caoutchouc de la bande de roulement du pneumatique neige conforme à l'invention est de comporter un système plastifiant spécifique, comprenant d'une part selon un taux A compris entre 10 et 60 pce une résine hydrocarbonée présentant une Tg supérieure à 20°C, d'autre part selon un taux B compris entre 10 et 60 pce un agent plastifiant liquide, étant entendu que le taux total A+B est supérieur à 50 pce.

Selon un mode de réalisation préférentiel de l'invention, le taux A de résine hydrocarbonée est compris entre 10 et 50 pce et le taux B de plastifiant liquide est compris entre 10 et 50 pce.

Selon un autre mode de réalisation préférentiel de l'invention, le taux total A+B de résine hydrocarbonée et de plastifiant liquide est compris entre 50 et 100 pce, plus préférentiellement est compris dans un domaine allant de 55 à 90 pce, notamment de 60 à 85 pce.

Selon un autre mode de réalisation particulier de l'invention, le rapport de A sur B est compris entre 1 : 5 et 5 : 1 (soit entre 0,2 et 5,0), préférentiellement entre 1 : 4 et 4 : 1 (soit entre 0,25 et 4,0).

Selon un autre mode de réalisation particulier de l'invention, le rapport massique de (A+B) sur la masse de charge inorganique renforçante, notamment de silice, est compris entre 50 et 80%, préférentiellement compris dans un domaine allant de 55 à 75%.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*)*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine hydrocarbonée est généralement supérieure d'environ 50 à 60°C à sa valeur de Tg. Le point de ramollissement est mesuré selon la norme ISO 4625 (méthode « Ring and Bail »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier.

L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes :
- solvant d'élution est le tétrahydrofurane,
- température 35°C ;
- concentration 1 g/litre ;
- débit : 1 ml/min ;
- volume injecté : 100 µl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier compris entre 30°C et 95°C) ;
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

La composition de caoutchouc de la bande de roulement de l'invention a pour autre caractéristique essentielle de comporter entre 10 et 60 pce d'un agent plastifiant liquide (à 23°C) dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE, les huiles MES (*Medium Extracted Solvates*)*,* les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation particulier de l'invention, le plastifiant liquide est une huile de pétrole, de préférence non aromatique.

Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant.

A ce titre peut être utilisé un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles.

Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier de l'invention, le plastifiant liquide est un dérivé terpénique. A titre d'exemple peut être cité le produit « Dimarone » de Yasuhara.

Conviennent également les polymères liquides issus de la polymérisation d'oléfines ou de diènes, comme les polybutènes, les polydiènes, en particulier les polybutadiènes, les polyisoprènes (connus également sous l'appellation « LIR ») ou les copolymères de butadiène et d'isoprène, ou encore les copolymères de butadiène ou d'isoprène et de styrène ou les mélanges de ces polymères liquides. La masse molaire moyenne en nombre de tels polymères liquides est comprise préférentiellement dans un domaine allant de 500 g/mol à 50000 g/mol, préférentiellement de 1000 g/mol à 10000 g/mol. A titre d'exemple peuvent être cités les produits « RICON » de SARTOMER.

Selon un autre mode de réalisation particulier de l'invention, le plastifiant liquide est une huile végétale. A titre d'exemple peut être citée une huile choisie dans le groupe constitué par les huiles de lin, carthame, soja, maïs, coton, navette, ricin, abrasin, pin, tournesol, palme, olive, noix de coco, arachide, pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%. A titre d'huile végétale, est utilisée avantageusement une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Selon un autre mode de réalisation particulier de l'invention, le plastifiant liquide est un triester choisi dans le groupe constitué par les triesters d'acide carboxylique, d'acide phosphorique, d'acide sulfonique et les mélanges de ces triesters.

Conviennent particulièrement les plastifiants liquides choisis dans le groupe constitué par les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate.

A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Le triester de glycérol est préféré. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Selon un autre mode de réalisation particulier de l'invention, le plastifiant liquide est un éther. A ce titre peuvent être cités les polyéthylène glycols ou les polypropylène glycols.

### I-4. Additifs divers :

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement de pneumatiques, notamment pneumatiques hiver, des charges autres que celles précitées, par exemple des charges non renforçantes comme la craie, ou bien des charges lamellaires comme le kaolin, le talc, des pigments, des agents de protection tels que cires anti-ozone, anti-ozonants chimiques, anti-oxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru ; ces agents sont par exemple des silanes hydrolysables tels que des alkyl-alkoxysilanes, des polyols, des polyéthers, des aminés, des polyorganosiloxanes hydroxylés ou hydrolysables.

### I-5. Préparation des compositions de caoutchouc :

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge inorganique renforçante, l'agent de couplage, le cas échéant le noir de carbone, le système plastifiant, jusqu'à atteindre une température maximale comprise entre 110°C et 190°C (phase dite «non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneumatique hiver.

Selon un mode de réalisation particulier, la dureté Shore A de la composition de caoutchouc selon l'invention est comprise dans un domaine allant de 50 à 70, notamment de 55 à 65. La dureté Shore A des compositions après cuisson est appréciée conformément à la norme ASTM D 2240-86.

L'invention concerne les pneumatiques précédemment décrits tant à l'état cru (c'est à dire, avant cuisson) qu'à l'état cuit (c'est à dire, après réticulation ou vulcanisation).

L'invention s'applique également aux cas où les compositions de caoutchouc précédemment décrites forment une partie seulement de bandes de roulement du type composites ou hybrides, notamment celles constituées de deux couches radialement superposées de formulations différentes (structure dite *"cap-base"*), toutes deux sculptées et destinées à entrer en contact avec la route lors du roulage du pneumatique, au cours de la vie de ce dernier. La partie à base de la formulation précédemment décrite pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement.

### II- EXEMPLES DE REALISATION DE L'INVENTION

### II.1 - Préparation des compositions

On procède pour les essais qui suivent de la manière suivante : on introduit dans un mélangeur interne (taux de remplissage final : environ 70% en volume), dont la température initiale de cuve est d'environ 60°C, successivement les élastomères, la silice, l'agent de couplage, les plastifiants ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions T1, C1 et C2 ainsi obtenues sont décrites (en pce) dans le tableau 1.

La composition T1 est une composition conventionnelle utilisable pour constituer une bande de roulement de pneumatique hiver, à base de polybutadiène et de copolymère SBR.

Dans cette composition témoin, les deux élastomères utilisés sont dépourvus de fonction SiOR ; le taux de charge inorganique renforçante est inférieur à 100 pce, et le taux A+B de système plastifiant est inférieur à 50 pce, constitué de résine plastifiante polylimonène (20 pce), d'huile végétale de tournesol (15 pce) et d'huile MES (5 pce) à titre d'agent plastifiant liquide.

Les compositions C1 et C2, conformes à l'invention, se caractérisent par la présence d'au moins 20 pce d'un élastomère diénique portant une fonction silanol, d'au moins 100 pce d'une charge inorganique renforçante, de plus de 50 pce d'un système plastifiant constitué de résine plastifiante (polylimonène) et d'agent plastifiant liquide (huile végétale de tournesol) à des taux respectivement compris entre 10 et 60 pce. L'élastomère SBR3 de la composition C1 porte une fonction diméthylsilanol en extrémité de chaîne et a été préparé selon le procédé décrit dans le brevet EP 0 778 311 B1. L'élastomère SBR4 de la composition C2 contient un mélange de 85% d'un SBR (SBR4A) portant une fonction diméthylsilanol à une extrémité de chaîne et 15% de SBR (SBR4B) étoilé à l'étain et de même microstructure que SBR4A.

Ces trois compositions ont été extrudées sous la forme d'une bande de roulement, pour être testées comme indiqué dans le paragraphe qui suit.

### II.2 - Essais en pneumatiques :

Les compositions T1, C1 et C2 sont ensuite utilisées comme bandes de roulement de pneumatiques tourisme hiver à carcasse radiale, notés respectivement PT1 (pneus témoins), P1 et P2 (pneus conformes à l'invention), de dimensions 225/45 R17 conventionnellement fabriqués et en tous points identiques, hormis les compositions de caoutchouc constitutives de leur bande de roulement.

Les pneumatiques sont soumis aux tests de freinage sur sol humide et sur sol enneigé tels que décrits ci-dessous.

Pour tester le freinage sur sol mouillé, les pneumatiques sont montés sur un véhicule automobile de marque Audi et de modèle A4, équipé d'un système de freinage ABS et la distance nécessaire pour passer de 80 km/h à 10 km/h est mesurée lors d'un freinage brutal sur sol arrosé (béton bitumineux). Une valeur supérieure à celle du témoin, arbitrairement fixée à 100, indique un résultat amélioré, c'est-à-dire une distance de freinage plus courte.

Pour tester le freinage sur sol enneigé, les pneumatiques sont montés sur un véhicule automobile de marque Volkswagen et de modèle Golf, équipé d'un système de freinage ABS et la distance nécessaire pour passer de 50 km/h à 5 km/h est mesurée lors d'un freinage d'urgence sur neige. Une valeur supérieure à celle du témoin, arbitrairement fixée à 100, indique un résultat amélioré, c'est-à-dire une distance de freinage plus courte.

Les résultats des tests de roulage sont rapportés dans le tableau 2, en unités relatives, la base 100 étant retenue pour le pneumatique témoin PT1.

On constate que les pneumatiques neige conformes à l'invention P1 et P2 présentent des indices respectifs de performance d'adhérence sur sol mouillé de 112 et 107, étonnamment bien supérieurs à ceux du pneumatique neige témoin PT1. On note en outre que ces résultats sont obtenus sans être au détriment de la performance sur sol enneigé qui est même améliorée dans le cas du pneumatique neige P2 (106).

En conclusion, les pneumatiques neige conformes à l'invention présentent une adhérence sur sol mouillé fortement améliorée, sans dégrader voire même en améliorant l'adhérence sur sol enneigé.

**Tableau 1**

| Composition n° : | T1 | C1 | C2 |
|---|---|---|---|
| BR (1) | 40 | | 40 |
| SBR1 (2) | 60 | | |
| SBR2 (3) | | 50 | |
| SBR3 (4) | | 50 | |
| SBR4 (5) | | | 60 |
| Noir de carbone (6) | 5 | 5 | 5 |
| Silice (7) | 90 | 105 | 105 |
| Agent de couplage (8) | 7.2 | 8.4 | 8.4 |
| Plastifiant liquide (9) | 5 | | |
| Plastifiant liquide (10) | 15 | 25 | 30 |
| Résine (11) | 20 | 40 | 30 |
| Total plastifiant | 40 | 65 | 60 |
| Acide stéarique | 3 | 3 | 3 |
| Cire anti-ozone | 1.5 | 1.5 | 1.5 |
| Antioxydant (12) | 2 | 2 | 2 |
| DPG (13) | 2.1 | 2.1 | 2.1 |
| ZnO | 1.2 | 1.2 | 1.2 |
| Accélérateur (14) | 1.6 | 1.6 | 1.6 |
| Soufre | 1.4 | 1.4 | 1.4 |

| | | | |
|---|---|---|---|
| (1) BR avec 4% de motif 1,2 et 93% de 1,4-cis (Tg = -106°C); (2) SBR1 : SBR avec 27% de motif styrène et 57% de motif 1,2 de la partie butadiénique (Tg = -24°C) ; (3) SBR2 : SBR avec 16% de motif styrène et 24% de motif 1,2 de la partie butadiénique (Tg -65°C) ; (4) SBR3 : SBR avec 16% de motif styrène et 24% de motif 1,2 de la partie butadiénique porteur d'une fonction silanol en extrémité de la chaîne élastomère (Tg -65°C) ; (5) SBR4 : SBR (étoilé Sn) avec 27% de motif styrène et 24% de motif 1,2 de la partie butadiénique porteur d'une fonction silanol en extrémité de la chaîne élastomère (Tg -48°C) ; (6) Grade ASTM N234 (société Cabot) ; (7) Silice « Zeosil 1165 MP » de la société Rhodia type « HDS » (8) TESPT (« Si69 » de la société Degussa) ; (9) Huile MES ("Catenex SNR" de Shell) (10) Huile de tournesol à 85 % en poids d'acide oléique, « Lubrirob Tod 1880 » de la société Novance ; (11)Résine polylimonène « Dercolyte L120 » de la société DRT ; (12)N-(1,3-diméthylbutyl)-N'-phényl-p-phénylènediamine, de la société Flexsys (13)Diphénylguanidine (« Perkacit » DPG de la société Flexsys) ; (14)N-dicylohexyl-2-benzothiazol-sulfénamide (« Santocure CBS » de la société Flexsys). | | | |

**Tableau 2**

| Pneumatique | PT1 | P1 | P2 |
|---|---|---|---|
| Composition n° : | T1 | C1 | C2 |
| Adhérence freinage sur neige | 100 | 100 | 106 |
| Adhérence freinage sur sol mouillé | 100 | 112 | 107 |

## Revendications

1. Pneumatique neige dont la bande de roulement comporte une composition de caoutchouc, ladite composition de caoutchouc comprenant au moins :
- 20 à 100 pce d'un premier élastomère diénique portant au moins une fonction SiOR, R étant l'hydrogène ou un radical hydrocarboné ;
- optionnellement 0 à 80 pce d'un deuxième élastomère diénique ;
- 100 à 160 pce d'une charge inorganique renforçante ;
- un système plastifiant comprenant :
- selon un taux A compris entre 10 et 60 pce, une résine hydrocarbonée présentant une Tg supérieure à 20°C ;
- selon un taux B compris entre 10 et 60 pce, un agent plastifiant liquide ;
- étant entendu que le taux total A+B est supérieur à 50 pce.

2. Pneumatique selon la revendication 1, dans lequel le premier élastomère comporte en outre des unités vinylaromatiques, préférentiellement des unités styrène.

3. Pneumatique selon la revendication 1 ou 2, dans lequel le premier élastomère comporte des unités butadiène.

4. Pneumatique selon les revendications 2 et 3, dans lequel le premier élastomère est un SBR.

5. Pneumatique selon l'une quelconque des revendications 1 à 4, dans lequel R est l'hydrogène.

6. Pneumatique selon l'une quelconque des revendications 1 à 4, dans lequel R est un alkyle.

7. Pneumatique selon l'une quelconque des revendications 1 à 6, dans lequel le premier élastomère diénique porte en outre au moins une fonction amine.

8. Pneumatique selon l'une quelconque des revendications 1 à 7, dans lequel le deuxième élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

9. Pneumatique selon la revendication 8, dans lequel le deuxième élastomère diénique est un polybutadiène.

10. Pneumatique selon la revendication 8, dans lequel le deuxième élastomère diénique est un copolymère de butadiène, préférentiellement un SBR.

11. Pneumatique selon l'une quelconque des revendications 1 à 10, dans lequel le deuxième élastomère diénique porte au moins une fonction étain.

12. Pneumatique selon l'une quelconque des revendications 1 à 11, dans lequel le taux du premier élastomère diénique est compris dans un domaine allant de 40 à 100 pce.

13. Pneumatique selon l'une quelconque des revendications 1 à 12, dans lequel le taux de charge inorganique renforçante est compris dans un domaine allant de 100 à 150 pce.

14. Pneumatique selon l'une quelconque des revendications 1 à 13, dans lequel la charge inorganique renforçante comprend de 50 à 100% en masse de silice.

15. Pneumatique selon l'une quelconque des revendications 1 à 14, dans lequel A est compris entre 10 et 50 pce et B est compris entre 10 et 50 pce.

16. Pneumatique selon l'une quelconque des revendications 1 à 15, dans lequel A+B est compris dans un domaine allant de 55 à 90 pce.

17. Pneumatique selon l'une quelconque des revendications 1 à 16, dans lequel le rapport de A sur B est compris entre 1 : 5 et 5 : 1, préférentiellement entre 1 : 4 et 4 : 1.

18. Pneumatique selon l'une quelconque des revendications 1 à 17, dans lequel la résine hydrocarbonée est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthylstyrène et les mélanges de ces résines.

19. Pneumatique selon l'une quelconque des revendications 1 à 18, dans lequel l'agent plastifiant liquide est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

20. Pneumatique selon la revendication 19, dans lequel l'agent plastifiant liquide est choisi dans le groupe constitué par les huiles MES, les huiles TDAE, les huiles naphténiques, les huiles végétales et les mélanges de ces huiles.

21. Pneumatique selon l'une quelconque des revendications 1 à 20, dans lequel le rapport massique de (A+B) sur la masse de charge inorganique renforçante est compris entre 50 et 80%, préférentiellement compris dans un domaine allant de 55 à 75%.

## Patentansprüche

1. Schneereifen, dessen Lauffläche eine Kautschukzusammensetzung umfasst, wobei die Kautschukzusammensetzung mindestens Folgendes umfasst:
- 20 bis 100 phe eines ersten Dienelastomers mit mindestens einer SiOR-Funktion, wobei R für Wasserstoff oder einen Kohlenwasserstoffrest steht;
- gegebenenfalls 0 bis 80 phe eines zweiten Dienelastomers;
- 100 bis 160 phe eines verstärkenden anorganischen Füllstoffs;
- ein Weichmachersystem, umfassend:
- ein Kohlenwasserstoffharz mit einer Tg von mehr als 20 °C gemäß einem Gehalt A zwischen 10 und 60 phe;
- einen flüssigen Weichmacher gemäß einem Gehalt B zwischen 10 und 60 phe;
- mit der Maßgabe, dass der Gesamtgehalt A + B größer als 50 phe ist.

2. Reifen nach Anspruch 1, wobei das erste Elastomer außerdem vinylaromatische Einheiten, vorzugsweise Styrol-Einheiten, umfasst.

3. Reifen nach Anspruch 1 oder 2, wobei das erste Elastomer ButadienEinheiten umfasst.

4. Reifen nach den Ansprüchen 2 und 3, wobei es sich bei dem ersten Elastomer um einen SBR handelt.

5. Reifen nach einem der Ansprüche 1 bis 4, wobei R für Wasserstoff steht.

6. Reifen nach einem der Ansprüche 1 bis 4, wobei R für ein Alkyl steht.

7. Reifen nach einem der Ansprüche 1 bis 6, wobei das erste Dienelastomer außerdem mindestens eine Aminfunktion trägt.

8. Reifen nach einem der Ansprüche 1 bis 7, wobei das zweite Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

9. Reifen nach Anspruch 8, wobei es sich bei dem zweiten Dienelastomer um ein Polybutadien handelt.

10. Reifen nach Anspruch 8, wobei es sich bei dem zweiten Dienelastomer um ein Butadien-Copolymer, vorzugsweise einen SBR, handelt.

11. Reifen nach einem der Ansprüche 1 bis 10, wobei das zweite Dienelastomer mindestens eine Zinnfunktion trägt.

12. Reifen nach einem der Ansprüche 1 bis 11, wobei der Gehalt des ersten Dienelastomers in einem Bereich von 40 bis 100 phe liegt.

13. Reifen nach einem der Ansprüche 1 bis 12, wobei der Gehalt an verstärkendem Füllstoff in einem Bereich von 100 bis 150 phe liegt.

14. Reifen nach einem der Ansprüche 1 bis 13, wobei der verstärkende anorganische Füllstoff 50 bis 100 Massen-% Kieselsäure umfasst.

15. Reifen nach einem der Ansprüche 1 bis 14, wobei A zwischen 10 und 50 phe liegt und B zwischen 10 und 50 phe liegt.

16. Reifen nach einem der Ansprüche 1 bis 15, wobei A + B in einem Bereich von 55 bis 90 phe liegt.

17. Reifen nach einem der Ansprüche 1 bis 16, wobei das Verhältnis von A zu B zwischen 1:5 und 5:1, vorzugsweise zwischen 1:4 und 4:1, liegt.

18. Reifen nach einem der Ansprüche 1 bis 17, wobei das Kohlenwasserstoffharz aus der Gruppe bestehend aus Cyclopentadien-Homopolymer- oder -Copolymerharzen, Dicyclopentadien-Homopolymeroder -Copolymerharzen, Terpen-Homopolymer- oder -Copolymerharzen, C5-Schnitt-Homopolymer- oder -Copolymerharzen, C9-Schnitt-Homopolymer- oder -Copolymerharzen, alpha-Methylstyrol-Homopolymer- oder Copolymerharzen und Mischungen dieser Harze ausgewählt ist.

19. Reifen nach einem der Ansprüche 1 bis 18, wobei der flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

20. Reifen nach Anspruch 19, wobei der flüssige Weichmacher aus der Gruppe bestehend aus MES-Ölen, TDAE-Ölen, naphthenischen Ölen, Pflanzenölen und Mischungen dieser Öle ausgewählt ist.

21. Reifen nach einem der Ansprüche 1 bis 20, wobei das Massenverhältnis von (A + B) zur Masse von verstärkendem anorganischem Füllstoff zwischen 50 und 80 % und vorzugsweise in einem Bereich von 55 bis 75 % liegt.

## Claims

1. Snow tyre, the tread of which comprises a rubber composition, said rubber composition comprising at least:
- 20 to 100 phr of a first diene elastomer bearing at least one SiOR function, R being hydrogen or a hydrocarbon radical;
- optionally 0 to 80 phr of a second diene elastomer;
- 100 to 160 phr of a reinforcing inorganic filler;
- a plasticizing system comprising:
- in a content A of between 10 and 60 phr, a hydrocarbon resin having a Tg above 20°C;
- in a content B of between 10 and 60 phr, a liquid plasticizing agent;
- it being understood that the total content A+B is greater than 50 phr.

2. Tyre according to Claim 1, wherein the first elastomer also comprises vinylaromatic units, preferably styrene units.

3. Tyre according to Claim 1 or 2, wherein the first elastomer comprises butadiene units.

4. Tyre according to Claims 2 and 3, wherein the first elastomer is an SBR.

5. Tyre according to any one of Claims 1 to 4, wherein R is hydrogen.

6. Tyre according to any one of Claims 1 to 4, wherein R is an alkyl.

7. Tyre according to any one of Claims 1 to 6, wherein the first diene elastomer also bears at least one amine function.

8. Tyre according to any one of Claims 1 to 7, wherein the second diene elastomer is selected from the group consisting of polybutadienes, natural rubber, synthetic polyisoprenes, butadiene copolymers, isoprene copolymers and blends of these elastomers.

9. Tyre according to Claim 8, wherein the second diene elastomer is a polybutadiene.

10. Tyre according to Claim 8, wherein the second diene elastomer is a butadiene copolymer, preferably an SBR.

11. Tyre according to any one of Claims 1 to 10, wherein the second diene elastomer bears at least one tin function.

12. Tyre according to any one of Claims 1 to 11, wherein the content of the first diene elastomer is in a range extending from 40 to 100 phr.

13. Tyre according to any one of Claims 1 to 12, wherein the content of reinforcing inorganic filler is in a range extending from 100 to 150 phr.

14. Tyre according to any one of Claims 1 to 13, wherein the reinforcing inorganic filler comprises from 50% to 100% by weight of silica.

15. Tyre according to any one of Claims 1 to 14, wherein A is between 10 and 50 phr and B is between 10 and 50 phr.

16. Tyre according to any one of Claims 1 to 15, wherein A+B is in a range extending from 55 to 90 phr.

17. Tyre according to any one of Claims 1 to 16, wherein the ratio of A to B is between 1:5 and 5:1, preferably between 1:4 and 4:1.

18. Tyre according to any one of Claims 1 to 17, wherein the hydrocarbon resin is selected from the group consisting of cyclopentadiene homopolymer or copolymer resins, dicyclopentadiene homopolymer or copolymer resins, terpene homopolymer or copolymer resins, Cs-cut homopolymer or copolymer resins, C₉-cut homopolymer or copolymer resins, α-methylstyrene homopolymer or copolymer resins and blends of these resins.

19. Tyre according to any one of Claims 1 to 18, wherein the liquid plasticizing agent is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and mixtures of these compounds.

20. Tyre according to Claim 19, wherein the liquid plasticizing agent is selected from the group consisting of MES oils, TDAE oils, naphthenic oils, vegetable oils and mixtures of these oils.

21. Tyre according to any one of Claims 1 to 20, wherein the weight ratio of (A+B) to the mass of reinforcing inorganic filler is between 50% and 80%, preferably in a range extending from 55% to 75%.
